# EUROPÄISCHE PATENTSCHRIFT

(11) **EP 1 344 030 B1**
(45) Veröffentlichungstag und Bekanntmachung des Hinweises auf die Patenterteilung: **08.12.2010**
(21) Anmeldenummer: 01989413.8
(22) Anmeldetag: 17.12.2001
(51) Int. Cl.: G01F 23/32, G01F 23/36

(54) **FÜLLSTANDSSENSOR**
LEVEL SENSOR
CAPTEUR DE NIVEAU

(30) Priorität: 22.12.2000 DE 10064591
(43) Veröffentlichungstag der Anmeldung: 17.09.2003
(73) Patentinhaber: Continental Automotive GmbH, 30165 Hannover (DE)
(72) Erfinder: BOUTON, Stéphane, F-57300 Pontpierre (FR); GETTE, Christophe, F-57245 Mecleuves (FR); KORST, Otto, 56414 Herschbach (DE)
(86) Internationale Anmeldenummer: PCT/DE2001/004729
(87) Internationale Veröffentlichungsnummer: WO 2002/052231

(56) Entgegenhaltungen:
- DE-A- 4 438 322
- DE-A- 19 746 276
- DE-A- 19 754 521
- DE-A- 19 842 336

## Beschreibung

Die Erfindung betrifft einen Füllstandssensor zur Erzeugung von elektrischen Signalen in Abhängigkeit eines Schwenkwinkels eines einen Schwimmer tragenden Hebelarms für einen Behälter eines Kraftfahrzeuges mit einem zur Befestigung an einer seitlichen Wandung im Behälter vorgesehenen Träger, mit einem aus Kunststoff gefertigten, in einer Lagerung des Trägers schwenkbaren Bügel, mit einem den Schwimmer halternden, an dem Bügel befestigten Hebeldraht, und mit einer an dem Träger angeordneten Führungsschiene zum Führen eines Führungselementes des Bügels in einer vorgesehenen axialen Position gegenüber dem Träger.

Solche Füllstandssensoren haben meist einen Potentiometer mit einer auf dem Träger angeordneten Schleifbahn und mit an dem Bügel befestigten Schleifkontakten zum Erzeugen der elektrischen Signale und sind aus der Praxis bekannt. Alternativ dazu werden die elektrischen Signale häufig auch mit einem magnetisch aktiven Positionssensor erzeugt. Magnetisch aktive Positionssensoren haben meist ein auf dem Träger zu befestigendes, von einem an dem Bügel angeordneten Magneten schaltbares Widerstandsnetzwerk. Der Behälter kann beispielsweise ein Kraftstoffbehälter oder ein Waschwasserbehälter einer Scheibenreinigungsanlage sein. Die Führungsschiene des bekannten Füllstandssensors ist als Teil des eine ebene Oberfläche aufweisenden Trägers ausgebildet und von der Lagerung wegweisend ausgerichtet (DE 197 54 521 A1). Die Führungsschiene kann gemäß der DE 44 38 322 A1 von einem U-förmigen, an dem Bügel angeordneten Führungselement hintergriffen werden. Hierdurch wird bei seitlichen auf den Bügel und den Hebeldraht wirkenden Kräften ein Wegbiegen des Bügels von dem Träger und damit ein Abheben der Schleifkontakte von der Schleifbahn oder eine Entfernung des Magneten von dem Widerstandsnetzwerk verhindert.

Nachteilig bei dem bekannten Füllstandssensor ist, daß der Bügel durch das Führungselement sehr große Abmessungen und damit ein hohes Gewicht aufweist. Hierdurch hat der Schwerpunkt des Bügels einen sehr großen Abstand von der Lagerung, so daß der Füllstandssensor sehr träge ist. Deshalb werden kleinere Veränderungen des Füllstands nur mit Verzögerung oder sprungartig von dem Potentiometer erfaßt. Durch das hohe Gewicht des Bügels benötigt dieser zudem eine große Menge Material.

Der Erfindung liegt das Problem zugrunde, einen Füllstandssensor der eingangs genannten Art so zu gestalten, daß er eine Veränderung des Füllstandes besonders schnell erfaßt und kostengünstig aufgebaut ist.

Dieses Problem wird erfindungsgemäß dadurch gelöst, daß die Führungsschiene in Richtung der Lagerung weisend angeordnet ist und daß der Bügel ein gabelförmiges, an seinem der Lagerung abgewandten Ende hin offenes, mit der Führungsschiene in Eingriff stehendes Führungselement hat.

Durch diese Gestaltung weist der Bügel sehr kleine Abmessungen und ein besonders geringes Gewicht auf. Der Schwerpunkt des Bügels ist zudem sehr nahe an der Lagerung angeordnet, so daß er eine besonders geringe Trägheit hat. Der Bügel vermag daher einer Veränderung des Füllstandes im Behälter besonders schnell zu folgen. Durch das geringe Gewicht des Bügels erfordert dieser einen entsprechend geringen Materialeinsatz, so daß er besonders kostengünstig herstellbar ist.

Die Führungsschiene könnte beispielsweise einen runden Querschnitt aufweisen. Der Träger läßt sich jedoch gemäß einer vorteilhaften Weiterbildung der Erfindung mit besonders geringem Aufwand einteilig mit der Führungsschiene aus Kunststoff im Spritzgußverfahren fertigen, wenn die Führungsschiene stegförmig gestaltet und parallel zu dem Träger angeordnet ist. Durch diese Gestaltung hat die Führungsschiene auf beiden Seiten jeweils eine Gleitbahn für das Führungselement.

Das gabelförmige Führungselement könnte beispielsweise in einem mittleren Bereich des Bügels angeordnet sein. Zur weiteren Verringerung der Abmessungen des Bügels trägt es jedoch bei, wenn das gabelförmige Führungselement an dem der Lagerung abgewandten Ende des Bügels angeordnet ist.

Der Bügel ist besonders zuverlässig axial an dem Träger gelagert und läßt sich dennoch sehr einfach an dem Träger montieren, wenn er zumindest einen Teil des Trägers im Bereich der Lagerung umgreifend gestaltet ist. Zur Montage läßt sich der Bügel einfach von der Lagerung her über den Träger schieben. Der Bügel ist anschließend axial im Bereich der Lagerung und an der Führungsschiene geführt.

Zur Vermeidung eines Kippens des Bügels kann das Führungselement besonders breit gestaltet sein. Hierdurch hat das Führungselement jedoch ein hohes Gewicht und eine große Anlagefläche an der Führungsschiene. Die große Anlagefläche führt zu unerwünschten Reibungsverlusten bei der Schwenkbewegung des Bügels. Ein Kippen des Bügels läßt sich gemäß einer anderen vorteilhaften Weiterbildung der Erfindung einfach durch zwei nebeneinander angeordnete gabelförmige Führungselemente vermeiden, ohne daß hierdurch das Gewicht des Bügels wesentlich erhöht wird.

Die Montage des Bügels gestaltet sich gemäß einer anderen vorteilhaften Weiterbildung der Erfindung besonders einfach, wenn zwischen den nebeneinander angeordneten Führungselementen ein den Schleifkontakt gegen die Schleifbahn des Potentiometers vorspannendes Federelement befestigt ist.

Eine Verformung der Führungsschiene könnte zu einem Abheben des Schleifkontaktes von der Schleifbahn oder zu einem Schleifen des Führungselementes führen. Die Führungsschiene hat gemäß einer anderen vorteilhaften Weiterbildung der Erfindung eine sehr hohe Stabilität, wenn sie einen abstehenden Rand aufweist.

Die Fertigung des erfindungsgemäßen Füllstandssensors gestaltet sich besonders kostengünstig, wenn die Führungsschiene in ihrem der Lagerung abgewandten Ende einen größeren oder gleich großen Abstand zu dem Träger hat wie an ihrem der Lagerung zugewandten Ende, und wenn einander zugewandte Flächen des Trägers und der Führungsschiene jeweils eben gestaltet sind. Durch diese Gestaltung läßt sich der Träger zusammen mit der Führungsschiene sehr einfach aus Kunststoff im Spritzgußverfahren in einer sehr leicht axial entformbaren Spritzgußform fertigen.

Der Träger benötigt gemäß einer anderen vorteilhaften Weiterbildung der Erfindung einen besonders geringen Materialeinsatz, wenn die Führungsschiene an ihren Enden von Halteteilen vor dem Träger gehalten ist.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: eine perspektivische Darstellung eines erfindungsgemäßen Füllstandssensors,
- Fig.2: eine Schnittdarstellung durch den Füll- standssensor aus Figur 1 entlang der Linie II - II,
- Fig.3: eine weitere Ausführungsform des erfindungs- gemäßen Füllstandssensors in einem Längs- schnitt durch einen Bügel.

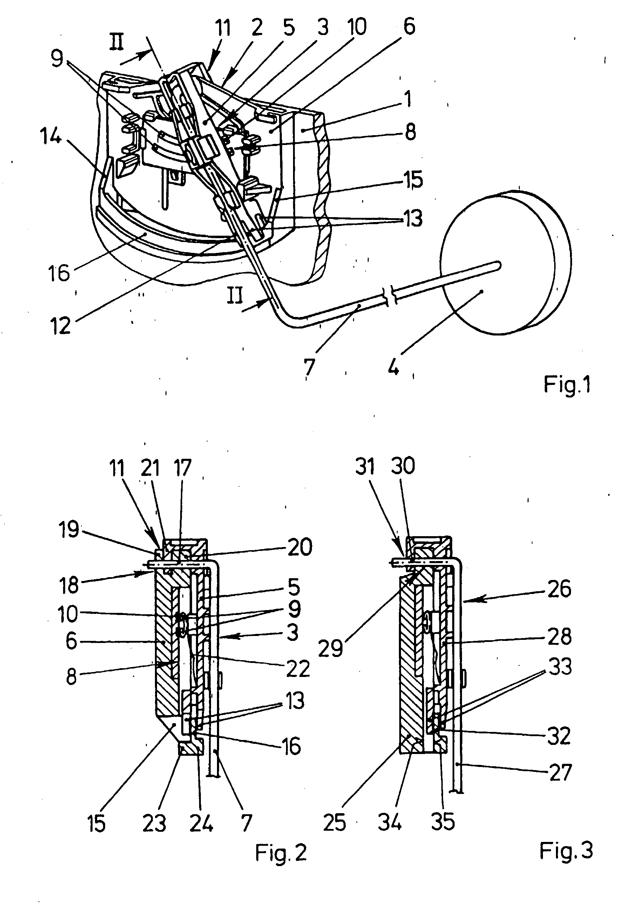

Die Figur 1 zeigt einen erfindungsgemäßen, an einer senkrechten Wandung 1 innerhalb eines Kraftstoffbehälters montierten Füllstandssensor 2. Der Füllstandssensor 2 hat einen an einem Hebelarm 3 befestigen Schwimmer 4. Der Hebelarm 3 ist mit einem aus Kunststoff gefertigten Bügel 5 an einem Träger 6 schwenkbar gelagert und hat einen an dem Bügel' 5 befestigten Hebeldraht 7 zur Halterung des Schwimmers 4. Der Schwimmer 4 folgt einem Kraftstoffspiegel im Kraftstoffbehälter und verschwenkt dabei den Hebelarm 3. Der Schwenkwinkel des Hebelarms 3 wird von einem Potentiometer 8 erfaßt. Der Potentiometer 8 hat zwei auf dem Träger 6 angeordnete Schleifbahnen 9 und einen an dem Bügel 5 befestigten Schleifkontakt 10. Der Schleifkontakt 10 ist als Doppelkontakt zur Überbrückung der Schleifbahnen 9 ausgebildet. Zum Führen des Bügels 5 in einer vorgesehenen axialen Position gegenüber dem Träger 6 hintergreift der Bügel 5 den Träger 6 im Bereich einer Lagerung 11. Auf seinem der Lagerung 11 abgewandten Ende hat der Bügel 5 zwei nebeneinander angeordnete gabelförmige Führungselemente 12, 13, welche mit einer seitlich mittels Halteteilen 14, 15 an dem Träger 6 befestigten Führungsschiene 16 in Eingriff stehen. Durch die Führung des Bügels 5 in der vorgesehenen axialen Position gegenüber dem Träger 6 wird ein Abheben des Schleifkontaktes 10 von den Schleifbahnen 9 zuverlässig vermieden.

Die Figur 2 zeigt den erfindungsgemäßen Füllstandssensor 2 aus Figur 1 in einer Schnittdarstellung entlang der Linie II - II. Hierbei ist zu erkennen, daß der Hebeldraht 7 im Bereich der Lagerung 11 des Bügels 5 eine Abwinklung 17 als Lagerachse für den Hebelarm 3 bildet. Der Träger 6 hat eine zwei Teile 19, 20 umfassende Lagerbohrung 18. Ein freies Ende einer Umgreifung 21 des Bügels 5 ist zwischen den beiden Teilen 19, 20 der Lagerbohrung angeordnet. Der Schleifkontakt 10 wird von einem zungenförmigen Federelement 22 gegen die Schleifbahnen 9 vorgespannt. Das zungenförmige Federelement 22 ist zwischen den beiden gabelförmigen Führungselementen 12, 13 an dem Bügel 5 befestigt. Zur Erhöhung ihrer Stabilität weist die Führungsschiene 16 zwei senkrecht abstehende Ränder 23, 24 auf.

Die Figur 3 zeigt eine weitere Ausführungsform des erfindungsgemäßen Füllstandssensors mit einem auf einem Träger 25 in einer Lagerung 31 schwenkbaren Hebelarm 26. Der Hebelarm 26 hat einen mit einem Hebeldraht 27 verklipsten Bügel 28. Der Träger 25 hat hier eine einteilige Lagerbohrung 29, die von einer Abwinklung 30 des Bügels 28 hintergriffen wird. Auf dem der Lagerung 31 abgewandten Ende weist der Bügel 28 ein gabelförmiges, mit einer Führungsschiene 32 des Trägers 25 in Eingriff stehendes Führungselement 33 auf. Die Führungsschiene 32 und ein der Führungsschiene 32 zugewandter Bereich des Trägers 25 weisen einander parallel angeordnete und eben gestaltete Flächen 34, 35 auf.

## Patentansprüche

1. Füllstandssensor zur Erzeugung von elektrischen Signalen in Abhängigkeit eines Schwenkwinkels eines einen Schwimmer (4) tragenden Hebelarms (7) für einen Behälter eines Kraftfahrzeuges mit einem zur Befestigung an einer seitlichen Wandung im Behälter vorgesehenen Träger (6, 25), mit einem aus Kunststoff gefertigten, in einer Lagerung des Trägers schwenkbaren Bügel (5, 28), mit einem den Schwimmer halternden, an dem Bügel befestigten Hebeldraht (7), und mit einer an dem Träger angeordneten Führungsschiene (16, 32) zum Führen eines Führungselementes des Bügels in einer vorgesehenen axialen Position gegenüber dem Träger, **dadurch gekennzeichnet, daß** die Führungsschiene (16, 32) in Richtung der Lagerung (11, 31) weisend angeordnet ist und daß der Bügel (5, 28) ein gabelförmiges, an seinem der Lagerung (11, 31) abgewandten Ende hin offenes, mit der Führungsschiene (16, 32) in Eingriff stehendes Führungselement (12, 13, 33) hat.

2. Füllstandssensor nach Anspruch 1, **dadurch gekennzeichnet, daß** die Führungsschiene (16, 32) stegförmig gestaltet und parallel zu dem Träger (6, 25) angeordnet ist.

3. Füllstandssensor nach Anspruch 1 oder 2, **dadurch gekennzeichnet, daß** das gabelförmige Führungselement (12, 13, 33) an dem der Lagerung (11, 31) abgewandten Ende des Bügels (5, 28) angeordnet ist.

4. Füllstandssensor nach zumindest einem der vorhergehenden Ansprüche, **dadurch gekennzeichnet, daß** der Bügel (5, 28) zumindest einen Teil des Trägers (6, 25) im Bereich der Lagerung (11, 31) umgreifend gestaltet ist.

5. Füllstandssensor nach zumindest einem der vorhergehenden Ansprüche, **gekennzeichnet durch** zwei nebeneinander angeordnete gabelförmige Führungselemente (12, 13).

6. Füllstandssensor nach zumindest einem der vorhergehenden Ansprüche, **dadurch gekennzeichnet, daß** zwischen den nebeneinander angeordneten Führungselementen (12, 13) ein den Schleifkontakt (10) gegen die Schleifbahn (9) des Potentiometers (8) vorspannendes Federelement (22) befestigt ist.

7. Füllstandssensor nach zumindest einem der vorhergehenden Ansprüche, **dadurch gekennzeichnet, daß** die Führuhgsschiene (16) einen abstehenden Rand (23, 24) aufweist.

8. Füllstandssensor nach zumindest einem der vorhergehenden Ansprüche, **dadurch gekennzeichnet, daß** die Führungsschiene (32) in ihrem der Lagerung (31) abgewandten Ende einen größeren oder gleich großen Abstand zu dem Träger (25) hat wie an ihrem der Lagerung (31) zugewandten Ende, und daß einander zugewandte Flächen (34, 35) des Trägers (25) und der Führungsschiene (32) jeweils eben gestaltet sind.

9. Füllstandssensor nach zumindest einem der vorhergehenden Ansprüche, **dadurch gekennzeichnet, daß** die Führungsschiene (16) an ihren Enden von Halteteilen (14, 15) vor dem Träger (6) gehalten ist.

## Claims

1. Filling-level sensor for generating electrical signals as a function of a pivoting angle of a float (4) -carrying lever arm (7) for a tank of a motor vehicle, with a carrier (6, 25) provided for fastening to a lateral wall in the tank, with a yoke (5, 28) made of plastic and pivotable in a mounting of the carrier, with a lever wire (7) holding the float and fastened to the yoke, and with a guide rail (16, 32), arranged on the carrier, for guiding a guide element of the yoke in an intended axial position in relation to the carrier, **characterized in that** the guide rail (16, 32) is arranged so as to point in the direction of the mounting (11, 31), and **in that** the yoke (5, 28) has a fork-shaped guide element (12, 13, 33) which is open at its end facing away from the mounting (11, 31) and which is in engagement with the guide rail (16, 32).

2. Filling-level sensor as claimed in Claim 1, **characterized in that** the guide rail (16, 32) has a web-shaped configuration and is arranged parallel to the carrier (6, 25).

3. Filling-level sensor as claimed in Claim 1 or 2, **characterized in that** the fork-shaped guide element (12, 13, 33) is arranged at that end of the yoke (5, 28) which faces away from the mounting (11, 31).

4. Filling-level sensor as claimed in at least one of the preceding claims, **characterized in that** the yoke (5, 28) is designed to engage around at least part of the carrier (6, 25) in the region of the mounting (11, 31).

5. Filling-level sensor as claimed in at least one of the preceding claims, **characterized by** two fork-shaped guide elements (12, 13) arranged next to one another.

6. Filling-level sensor as claimed in at least one of the preceding claims, **characterized in that** a spring element (22) prestressing the wiper contact (10) against the wiping track (9) of the potentiometer (8) is fastened between the guide elements (12, 13) arranged next to one another.

7. Filling-level sensor as claimed in at least one of the preceding claims, **characterized in that** the guide rail (16) has a projecting edge (23, 24).

8. Filling-level sensor as claimed in at least one of the preceding claims, **characterized in that** the guide rail (32) is at a greater or equal distance from the carrier (25) at its end facing away from the mounting (31) than at its end facing the mounting (31), and **in that** surfaces (34, 35) of the carrier (25) and of the guide rail (32) which face one another in each case have a plane configuration.

9. Filling-level sensor as claimed in at least one of the preceding claims, **characterized in that** the guide rail (16) is held at its ends by holding parts (14, 15) in front of the carrier (6).

## Revendications

1. Capteur de niveau de remplissage permettant de générer des signaux électriques en fonction d'un angle de basculement d'un bras de levier (7) portant un flotteur (4) pour un réservoir de véhicule automobile, où ledit Capteur de niveau de remplissage a un support (6, 25) prévu pour une fixation sur une paroi latérale dans le réservoir, un étrier (5, 28) fabriqué en matière plastique et pivotant dans un palier du support, une tige de levier (7) portant le flotteur et fixée à l'étrier et un rail de guidage (16, 32) monté sur le support et destiné à guider un organe de guidage de l'étrier dans une position axiale prévue par rapport au support, **caractérisé par le fait que** le rail de guidage (16, 32) est orienté dans la direction du palier (11, 31) et que l'étrier (5, 28) a un organe de guidage (12, 13, 33) ouvert à son extrémité en forme de fourche opposée au palier (11, 31) et en prise avec le rail de guidage (16, 32).

2. Capteur de niveau de remplissage selon la revendication 1, **caractérisé par le fait que** le rail de guidage (16, 32) est exécuté sous forme de barre et est disposé parallèlement au support (6, 25).

3. Capteur de niveau de remplissage selon la revendication 1 ou 2, **caractérisé par le fait que** l'organe de guidage (12, 13, 33) en forme de fourche est placé sur l'extrémité de l'étrier (5, 28) opposée au palier (11, 31).

4. Capteur de niveau de remplissage selon au moins l'une des revendications précédentes, **caractérisé par le fait que** l'étrier (5, 28) est réalisé de telle sorte qu'il entoure au moins une partie du support (6, 25) dans la zone du palier (11, 31).

5. Capteur de niveau de remplissage selon au moins l'une des revendications précédentes, **caractérisé par** deux organes de guidage (12, 13) en forme de fourche placés l'un à côté de l'autre.

6. Capteur de niveau de remplissage selon au moins l'une des revendications précédentes, **caractérisé par le fait qu**'un élément à ressort (22) est fixé entre les organes de guidage (12, 13) placés l'un à côté de l'autre et applique avec une force de précontrainte le contact à frottement (10) contre la glissoire (9) du potentiomètre (8).

7. Capteur de niveau de remplissage selon au moins l'une des revendications précédentes, **caractérisé par le fait que** le rail de guidage (16) a une bordure (23, 24) faisant surplomb.

8. Capteur de niveau de remplissage selon au moins l'une des revendications précédentes, **caractérisé par le fait que** le rail de guidage (32) a, à son extrémité opposée au palier (31), un écart par rapport au support (25) qui est plus important ou égal à celui de son extrémité tournée vers le palier (31) et que des surfaces (34, 35) du support (25) et du rail de guidage (32) tournées l'une vers l'autre sont planes.

9. Capteur de niveau de remplissage selon au moins l'une des revendications précédentes, **caractérisé par le fait que** le rail de guidage (16) est maintenu devant le support (6) par des pièces de retenue (14, 15) à ses extrémités.
